# EUROPEAN PATENT SPECIFICATION

(11) **EP 3 696 574 B1**
(45) Date of publication and mention of the grant of the patent: **04.09.2024**
(21) Application number: 19157236.1
(22) Date of filing: 14.02.2019
(51) Int. Cl.: G01S 19/28

(54) **ROBOTIC VEHICLE FOR SOIL CULTIVATION**
ROBOTERFAHRZEUG ZUR BODENBEARBEITUNG
VÉHICULE ROBOTISÉ POUR LA CULTURE DU SOL

(43) Date of publication of application: 19.08.2020
(73) Proprietor: Stiga S.p.A., 31033 Castelfranco Veneto (TV) (IT)
(72) Inventor: ROBINSON, Sean, 31033 Castelfranco Veneto (TV) (IT); SCAPIN, Michele, 36061 Bassano del Grappa (VI) (IT); CECCHETTO, Mauro, 35018 San Martino di Lupari (PD) (IT); SCHMIDT, Alexander, 8041 Graz (AT); MOOSBRUGGER, Anton, 8041 Graz (AT)
(74) Representative: Richardt Patentanwälte PartG mbB

(56) References cited:
- EP-A1- 3 084 541
- WO-A1-2006/132003
- US-A1- 2013 088 389
- US-A1- 2017 031 368
- US-A1- 2017 347 521

## Description

The invention relates to a robotic vehicle for soil cultivation, a method for operating a robotic vehicle and a computer program product.

State-of-the-art robotic vehicles are known for soil cultivation. For use in areas with different soil conditions or obstacles on the surface to be machined a precise determination of position of the robot vehicle is necessary. For example, WO2017092798 A1 relates to a robotic work tool for movable operation within a work area. The robotic lawnmower comprises a satellite navigation device; and a controller, the controller being configured to cause the robotic work tool to movably operate within the work area based on positions partly or in whole determined from satellite signals received by the satellite navigation device being a differential satellite navigation device and on phase information received from a reference station.

US 2017/0347521 A1 relates to a robotic lawnmower with a satellite navigation device for movable operation within a work area. WO 2006 132003 A1 describes a GPS reception device and a GPS positioning correction method capable of judging a satellite signal affected by a multi path by a simple and sure method and correcting a measured position of a mobile station. A reference station includes position correction data calculation means and reference station reception intensity measurement means. A mobile station includes positioning means, mobile station reception intensity measurement means, and positioning correction means. The reference station transmits the position correction data and the satellite signal reception intensity at the reference station to the mobile station. The mobile station compares the reception intensity at the reference station to the reception intensity at the mobile station for each of the satellite signals of the satellites. When the difference is equal to or above a predetermined threshold value, the satellite signal of the satellite is excluded from the positioning satellite signal.

For example, EP 3 084 541 B1 describes a robotic work tool system comprising a charging station and a robotic work tool. The robotic work tool comprises a position determining device for determining a current position. The robotic work tool is configured to determine that reliable navigation through said position determining device is no longer possible, such as when satellite signal reception is not possible, at a time point and position and in response thereto generate an obstacle map which gives information on the position of at least one obstacle, determine when an area will be shadowed with regards to satellite reception based on said obstacle map, and to schedule operation of the robotic work tool accordingly.

It is an objective to provide for an improved robotic vehicle for soil cultivation, an improved method for operating a robotic vehicle and a computer program product.

The objectives underlying the invention are solved by the features of the independent claims.

Disclosed is a robotic vehicle for movable operation in a work area as in independent claim 1. The vehicle base spaced apart from the vehicle is, e.g. a mower base. The initializing process comprising optionally determining a location of the vehicle based on the second set of GNSS signals. The accuracy being determining is an accuracy of a e.g. hypothetical or real location determination. Generally, each grid point represents a respective area segment, i.e. tile, of the work area.

A robotic vehicle may be any self-propelled vehicle that autonomously moves within the work area. For example, the vehicle is battery-powered and makes use of the vehicle base the vehicle is able to automatically travel to in order to be recharged.

The soil cultivation may comprise mowing of a lawn, core aerification (recommended practice for many lawns reducing soil compaction and thatch, improve surface drainage etc.), watering of soil areas etc. For example, the robotic vehicle is a robotic lawn mower.

The "vehicle base" is understood as a fixed base comprising a GNSS receiver for receiving the first set of GNSS signals. The purpose of the vehicle base may be manifold. For example, the base could serve as a shelter for the robot to protect it from the weather when the robot is not in use. The base could serve as a charging station for the robot. Or the base could serve as a reference position for the robot, in which case the exact position of the base should preferably be known. In this case a later exact position determination of the robot via differential GNSS (especially differential GPS) is possible. Differential Global Positioning Systems (DGPS) are e.g. enhancements to the Global Positioning System (GPS) which provide improved location accuracy, in the range of operations of each system. A fixed ground-based reference station may be used to broadcast the difference between the positions indicated by the GPS satellite system and its known fixed position. Receiver stations may correct their positions based on that difference.

GNSS signals may be signals originating from satellites of the GPS, GLONASS, Galileo or BeiDou system. The GNSS positioning for obtaining a receiver's position is derived through various calculation steps. In essence, a GNSS receiver measures the transmitting time of GNSS signals emitted from four or more GNSS satellites and these measurements are then used to obtain its position (i.e., spatial coordinates) and reception time.

It has to be noted that that location determination does not have to be performed in such a manner that a real spatial position is obtained from that. It may be sufficient to calculate the uncertainty that may exist in case a determination off the spatial position from the second set of GNSS signals would be performed. Typically, trilateration is used for GNSS based spatial position determination, wherein for the above described accuracy determination it may be sufficient to know "size" of the zone of uncertainty the spheres in trilateration will intersect.

In order to permit the robotic vehicle to determine at which grid point it is actually located, either the second set of GNSS signals may be used for that purpose or other means may be used that permits to determine the actual location of the vehicle. For example, any kinds of optical systems, acoustical systems and beacon guidance systems may be used for that purpose. Further, if available, a deduced reckoning navigation device of the vehicle may be used for that purpose.

Embodiments may have the advantage, that the accuracy of a location determination is available at rather high accuracy. A technical advantage could be that the achievable accuracy is in the lower centimeter range, which could make a high-precision mowing process possible. For example, the accuracy is in the range of 5cm, preferably 2cm, whereby "accuracy" here means the maximum deviation from the real position.

The accuracy of GNSS data may depend on many factors. One source of errors in the GNSS position accuracy originate from multipath effects. Multipath occurs when part of the signal from the satellite reaches the receiver after one or more reflections from the ground, a building, or another object. First at all, these reflected signals can interfere with the signal that reaches the receiver directly from the satellite. Second, due to the range delay in multipath due to the result of the reflection of the GNSS signal the position as determined using such a multipath signal is falsified. Another source of errors are weak signals. Signals from other high-frequency transmitters can interfere with the GNSS receiver even at low field strengths, resulting in measurement errors and interference from high-frequency signals. Potential sources of interference may for example include harmonics of the transmission frequencies of TV and radio transmitters, mobile telecommunication system networks and radar transmitters.

By comparing the signal qualities of the first set of GNSS signals and the second set of GNSS signals the (hypothetical) accuracy of a location determination based on the second set of GNSS signals is not solely relying on this second set of GNSS signals but also considers the first set of GNSS signals. The signal qualities like signal-to-noise ratios or signal intensities of the first and second set of GNSS signals may permit to identify and omit parts of the second set of GNSS signals that are of low quality, i.e. that may be multipath signals, signals disturbed by interreference with other non-GNSS-based signals etc.

In one example, an obstacle may shadow GNSS reception partially at a certain grid point and point in time. In case the accuracy of location determination would solely be based on the second set of GNSS signals, such a grid point may erroneously be evaluated as a good grid point which position is reliably determinable using GNSS signals, even though the respective position determination would be rather imprecise due to multipath errors and interreferences. By additionally considering the first set of GNSS signals that was recorded at that point in time, e.g. multipath errors can be easily detected due to the spatial distance of the vehicle base GNSS receiver from the vehicle GNSS receiver and most probably the absence of similar GNSS signal reflections at the vehicle base and the GNSS receiver.

For example, execution of the instructions by the processor causes the vehicle for performing the movable operation based on the determination of the accuracy.

In accordance with an embodiment, execution of the instructions by the processor further causes the vehicle for planning the movable operation based on at least some of the grid points for which an accuracy of the location determination is available and the accuracy of the location determination.

This may have the benefit that navigation of the vehicle for performing the movable operation like e.g. mowing a lawn can be performed at a rather high precision since only grid points are considered here for which it can be made sure that an accuracy of the location determination is available. For example, by considering the accuracy of the location determination only such grid points may be traveled during the movable operation for which a certain minimum quality of navigation preciseness can be met.

In accordance with an embodiment of the invention the first and second GNSS signals are received from satellites that are located at certain satellite positions in the sky above the base and the vehicle, the comparison of the signal qualities of the first set of GNSS signals and the second set of GNSS signals resulting in a quality number per satellite position. This may permit to have a basis for evaluating the quality of a certain satellite position for e.g. usage of the respective satellite GNSS signals for the accuracy determination of the location determination.

Execution of the instructions by the processor causes the vehicle further for performing a predicting process for at least some of the grid points, the predicting process forecasting the accuracy of a location determination for points in time future to the respective first point in time. This may be beneficial in case during the initialization process some of the coordinate grid points of the work area were missed or not covered. By means of the predicting process it may be possible to obtain a contiguous area on which the vehicle can operate.

The predicting process forecasting the accuracy of the location determination for at least some of the grid points of the subset is using at least one of GNSS Ephemerides, Almanacs and satellite repeat cycles applied on the first or second set of GNSS signals received at the respective first point in time. Broadcast ephemerides are forecasted, predicted or extrapolated satellite orbits data which are transmitted from the satellite to the receiver in the GNSS signal. Alternatively or additionally daily GNSS broadcast ephemeris files may be used which are may be downloaded e.g. via a wide area network and which a merge of the individual GNSS data files into one file. Compared to GNSS ephemerides, the GNSS almanacs contain less accurate orbital information than ephemerides, however with longer validity. The repeat cycle of a satellite describes the fact that a satellite generally follows an elliptical path around the Earth. The time taken to complete one revolution of the orbit is called the orbital period. The satellite traces out a path on the earth surface, called its ground track, as it moves across the sky. As the Earth below is rotating, the satellite traces out a different path on the ground in each subsequent cycle. The time interval in which nadir point of the satellite passes over the same point on the Earth's surface for a second time (when the satellite retraces its path) is called the repeat cycle of the satellite.

Any of these GNSS Ephemerides, Almanacs and satellite repeat cycles may be used to predict at which point in time in the future a satellite constellation may be available again that in a certain manner reflects the satellite constellation for the given grid point that was given during the initialization phase. This may permit a reliable and easy future planning of future movable operation of the vehicle. Simply spoken, in case for certain satellite constellation at a certain the grid points and time the accuracy of location determination that was considered as being a good, this fact can be used at the future point in time thus also knowing in that in that future point in time the quality of position determination of the vehicle will be also good.

In accordance with an embodiment, the predicting process forecasting the accuracy of the location determination is comprising: forecasting a reception of first or second GNSS signals for said points in time future to the first point in time from satellites located at a sky area around the certain satellite positions, the accuracy of the location determination being forecasted using the forecasted reception of the first or second GNSS signals.

This may have the benefit that only GNSS signals originating from satellites and is sky area in close vicinity to the certain satellite positions are used for forecasting the reception of the first and second GNSS signals for a future point in time. As mentioned above, this may permit a reliable and easy future planning of future movable operation of the vehicle.

For example, per satellite position the forecasting of the accuracy of the location determination is performed using either the forecasted reception of the first GNSS signals weighted by the quality number of that satellite position or the forecasted reception of the second GNSS signals excluding GNSS signals from satellite positions for which the quality number does not fulfill a first minimum quality criterion.

Here, the first alternative realizes that certain first GNSS signals may be blocked at the grid point due to obstacles. Blocking may be only partially or completely, which however has certain negative effect on the quality of position determination. The weighting of a first GNSS signal received from certain satellite position with the quality number of that satellite position therefore accounts for that possibility that in the end that satellite position may be partially or fully shadowed and therefore not be fully available for a high-quality location determination. The quality number may for example be a ratio between the second GNSS signal and the first GNSS signal intensities or S/N-ratios. Any other means that reflect the quality of a received signal may also be employed here.

In the second alternative only the second GNSS signals are used, however with the limitation that GNSS signals are excluded in case the quality number does not fulfill certain first minimum quality criterion. This may have the benefit that satellite signals are excluded from any forecasting of signal receptions from which it is known that they may negatively influence the location determination procedure.

In accordance with an embodiment, the sky above the base and the vehicle is represented by a set of discretized zones, the sky area around a certain satellite position being confined by the boundaries which confine the zone in which the satellite position is located. For example, the sky above the GNSS receiver of the vehicle may be projected onto a 2D matrix represented by a coordinate grid, the coordinate grid forming individual zones. A skyplot provides the possibility to represent satellite positions within such a 2D matrix in a polar projection. The position of the satellite inside the outer circle of such a skyplot indicates the two angles azimuth and elevation. The azimuth may be drawn as central angle and the elevation may be provided as circle radius. Different elevations may correspond to individual grid circles of respectively different diameters. The individual azimuth angles may be represented as lines originating from the center of the skyplot towards the outer circle. These lines therefore also correspond to parts of the coordinate grid. In total, the coordinate grid is made up of the circles and the lines.

By using a skyplot it is not necessary to just rely on a single exact satellite position in the sky but to account for the fact that certain variation of the given satellite position in the sky around that satellite position will not significantly affect the total quality of location determination in case the reception conditions of signals from this satellite position was considered as being good or sufficient enough.

In accordance with an embodiment of the invention, the predicting process is further comprising determining a sky area of good reception which comprises at least some of the certain satellite positions for which the quality number of that satellite position fulfills a first minimum quality criterion, the sky area around a certain satellite position being confined by the boundaries which confine the sky area of good reception. This may be beneficial in case the higher number of satellites are available for which the quality of signal reception is rather good. In case the satellites are evenly distributed over the sky, certain shadow areas may be easily the identifiable. In the case from the satellite positions for which the quality number fulfills the first minimum quality criterion it is possible to draw as a contour line regarding the shadowed area, any position the of the sky outside the shadow area can be considered as the area of good reception. As a consequence, it may again not be necessary to just rely on a single exact satellite position in the sky but to account for the fact that a variation of location of the satellite positions within the area of good reception in the sky will not significantly (if at all) affect the total quality of location determination.

In accordance with an embodiment, the determination of the accuracy of the location determination is only considering GNSS signals from satellite positions for which the quality number of that satellite positions fulfills a first minimum quality criterion. This principle may be applied as a general rule within the whole described process as it may ensure that the determination of the accuracy of the location determination is only performed with the respect to signals that meet a certain quality. It has to be noted that the quality number may comprise, as described above, a ratio between the second GNSS signal and the first GNSS signal intensities or S/N-ratios.

The quality number may also rate the position of the individual satellites in the sky. For that purpose, a weighting of the quality number by the Dilution of precision (DOP) may be used such that for certain unfavorable satellite constellations the respective quality numbers may be automatically negatively influenced. Generally, the relative satellite-receiver geometry plays a major role in determining the precision of estimated positions. When visible navigation satellites are close together in the sky, the geometry is said to be weak and the DOP value is high; when far apart, the geometry is strong and the DOP value is low. Thus, a low DOP value represents a better positional precision due to the wider angular separation between the satellites used to calculate the vehicle's position.

In accordance with an embodiment, in case with respect to a given grid point the quality number for a certain satellite position does not fulfill a first minimum quality criterion, for that grid point any GNSS signals from said satellite position are excluded for the planning of the movable operation. In case for example the vehicle is crossing a given grid point multiple times and it occurs once that a GNSS signals from a certain satellite position does not fulfill the first minimum quality criterion, for the planning of the movable operation GNSS signals originating from that certain satellite position will always be excluded, irrespective if later on the quality of GNSS signals originating from that certain satellite position may improve. This may have the benefit that for all times a rather robust approach is provided based on which a precise navigation of the vehicle is possible using as trajectory at least part of the grid points for which then accuracy of the location determination is available and the accuracy of the location determination is sufficiently high. For example, a large vehicle like for example a caravan may obstruct at a given grid point some GNSS signals from certain satellite positions. Irrespective if the caravan is present or not, the approach is based on the worst-case scenario in which the caravan is present regarding the planning of the movable operation. Thus, it may be ensured that soil cultivation will be possible at high positioning precision, irrespective if the caravan is there or not.

This principle of exclusion of satellite positions holds true for both, the initialization phase in which state of for the same grid points may be recorded multiple times as different points in time, as well as for the actual soil cultivation process, i.e. the movable operation during which a grid point used in the initialization phase or later may also be crossed once or multiple times.

The predicting process is comprising an interpolation, the interpolation being performed for at least some of the grid points for which the accuracy of a location determination for points in time future to the respective first point in time is yet unavailable, the interpolation considering grid points e.g. directly adjacent to each other for which the accuracy of a location determination for points in time future to the respective first point in time is available, the interpolation resulting in estimated accuracies of location determination for the grid points for which the interpolation was performed.

This may have the benefit that it is not necessary to have an initialization phase that covers all grid points of the work area and which consequently it would take significant amount of time for GNSS acquisition. Instead, the interpolation is performed which assumes that for example for neighboring grid points the variation in location determination accuracy will only vary by small amounts. The interpolation may further consider the course of the location determination accuracy between different grid points, such that with a rather high precision an estimation can be made regarding the location determination accuracy for neighboring grid points.

In accordance with an embodiment, during the initialization process the vehicle is randomly moving within the work area, the random movement directing the vehicle to the grid points of the subset of the grid points. For example, the grid points of the subset may result from the random movement of the vehicle. Vice versa it is also possible that the grid points of the subset are randomly selected and that the vehicle is then directed randomly to these grid points. Generally, this may have the benefit that the individual grid points are more or less evenly distributed over the work area such that each for example the above-mentioned interpolation is effectively available for being performed for a large number of grid points. A further benefit may be that due to the random distribution of the grid points when aborting the initialization process it is highly probable that the accuracy of a location determination is available for a more or less equally distributed subset of the grid points. This would be helpful for providing a good coverage of the work area with accuracies of location determination being directly available via the received GNSS data or indirectly available via interpolation for the major part of the work area.

In accordance with an embodiment, the planning of the movable operation comprises clustering of at least some of the grid points for which the accuracy of the location determination is available, the clustering resulting in one or more sets of clustered grid points, wherein for each set of the clustered grid points starting from a respective second point in time moving of the vehicle along said set of clustered grid points guided using a third set of GNSS signals received from the GNSS receiver during said movement is possible with an accuracy of the location determination during the guiding fulfilling a second minimum quality criterion. Preferably, for a given one of the sets each of the grid points have at least one immediately adjacent grid point in that set.

The clustering may have the benefit that a basis is provided on which a scheduling of the moveable operation is possible in an easy manner. Generally, the clustering ensures that starting from a certain time in future the vehicle is able to navigate along grid points of a set of clustered grid points in such a manner, that the quality of navigation is sufficiently high, i.e. that a precise navigation in terms of location determination is guaranteed.

A navigation of a vehicle is understood as a guiding of the vehicle to a desired grid point using the vehicle's position detector to determine the vehicle's real position relative to the desired grid point.

In accordance with an embodiment, the work area is comprising boundaries confining the work area, wherein for grid points lying within a predefined boundary zone bordering the boundaries the second minimum quality criterion is tightened up, for example by a relative value, for example a value in between 10% and 30%. This may have the benefit that an unintentional movement of the vehicle out of the work area is prohibited due to an imprecise location determination at the boundaries of the work area. The predefined boundary zone may be an edge strip with a given width, which borders with a side directly to the boundaries.

In accordance with an embodiment, at least one of the predicting process and the clustering are comprising for a grid point: adjusting the associated accuracy of location determination taking into account that the position determination is additionally performed using a deduced reckoning position estimate obtained from a deduced reckoning navigation device of the vehicle. For example, the taking into account that the position determination is additionally performed using the deduced reckoning position estimate is restricted to grid points located within a maximum predefined distance from a grid point for which the unadjusted associated accuracy of location determination fulfills the second minimum quality criterion.

A "deduced reckoning navigation device" may comprise anyone of a direction component that can receive x-axis and y-axis acceleration information from sensors, e.g., gyroscopes and accelerometers, gravitational sensors. Further, it may comprise compresses, odomemetric sensors etc. Odometric sensors are generally motion sensors which provide motion in formation for usage in odometry, i.e. an information about a change in position over time. Odometry makes for examples usage of the knowledge about the vehicles driving wheel circumference and recorded wheel rotations and steering direction in order to calculating the vehicle's current position by using a previously determined (reference) position. Generally, a deduced reckoning navigation device in the context of the present disclosure is a device that besides GNSS signal information uses any available sensor information for dead reckoning. In navigation, dead reckoning is the process of calculating one's current position by using a previously determined position, or fix, and advancing that position based upon known or estimated speeds over elapsed time and course.

This is based on the insight that even without a high-quality tea GNSS location determination being available, starting from a precisely known location and using additionally that deduced reckoning position estimate it is still possible to supplement the GNSS location determination with additional deduced reckoning position data standing for example from odometry, such that in total the accuracy of location determination is sufficiently high for performing the movable operation.

Since the usage of the deduced reckoning position estimate is restricted to grid points located within a maximum predefined distance from a grid point, it may be ensured that location determination errors occurring when using the deduced reckoning position estimate are not accumulating in a manner that the total accuracy of location determination would be influenced in a negative manner.

In accordance with an embodiment, the planning of the movable operation is comprising scheduling the movable operation for obtaining a movement trajectory of the vehicle for performing the movable operation, the scheduling comprising selecting one or more of the sets of clustered grid points, the movement trajectory comprising the grid points of the one or more sets of clustered grid points. This may have the benefit that either starting from the desired point in time for example set by a user the actual movable operation is performed, or that the scheduling itself is selecting at most suitable starting point in time based on the clustered grid points starting from which the movable operation can be performed in e.g. a rather efficient manner. For example, an efficient manner would be a manner in which in a consecutive way the majority of clusters grid points can be covered by the movement trajectory.

In accordance with an embodiment, execution of the instructions by the processor further causes the vehicle for performing a movement of the vehicle to said selected one or more of the sets of clustered grid points and repeating the steps of the initialization process during the movement for the grid points traveled during the movement and with the first point in time being the actual point in time of movement on the respective grid point. As a consequence, the available data regarding location determination accuracy is more and more completed with real measurements data of GNSS signals for different points in time. For example, the movement of the vehicle may also involve movement over grid points for which only interpolation accuracy data is available. This interpolation accuracy data can then be completed by real measurement data based on GNSS signals. That repetition of the steps of the initialization process may also involve further interpolation, predicting and taking into account that the deduced reckoning position estimate may be used.

In accordance with an embodiment, the movement trajectory obtained for a single contiguous movable operation results in a fragmentation degree of the work area, the fragmentation degree describing the degree of fragmentation of the work area with respect to subareas of the area covered by the trajectory, wherein in case the fragmentation degree is above a predefined fragmentation threshold, the second minimum quality criterion is successively relaxed within specified limits until the degree of fragmentation is below the predefined fragmentation threshold. Fragmentation is understood as follows: if the subareas of the area covered by the trajectory are not continuously and without gaps covered by the trajectory, but there are "pieces" of uncovered subareas (fragments) between them, this is understood as a fragmentation.

This may have the benefit that in contiguous manner at rather large part of the work area can be processed by means of the movable operation in a quick manner. Instead of having the vehicle performing the movable operation on the individual sets of clustered grid points each separated by respective unprocessed gaps of the work area, the movable operation may therefore be performed in quicker none interrupted manner. It has to be noted here that each interruption of the movable operation will require, that the vehicle has to perform additional movements in order to compensate for this interruption.

In accordance with an embodiment, the vehicle is further comprising a compass, wherein execution of the instructions by the processor further causes the vehicle for performing the planned movable operation resulting in a movement of the vehicle, wherein in case moving of the vehicle guided using the GNSS signals received from the GNSS receiver during said movement is not possible anymore with an accuracy of the location determination during the guiding fulfilling a fourth minimum quality criterion: determining the heading of the vehicle using the compass, determining the compass direction in which the area lies, in which the vehicle was last guided with the accuracy of the location determination during the guiding fulfilling the second minimum quality criterion. This may be considered as for example a backup solution in a case for whatever reason the vehicle gets displaced in an unforeseen manner from the position in which the vehicle was last guided. For example, the vehicle may get offset by being hit by person or an animal or the vehicle may start to slip into a certain direction on a step hill. With the fourth minimum quality criterion having a requirement on quality lower than the second minimum quality criterion, the vehicle may not be able to determine its actual location in the precise manner. Nevertheless, by using the heading of the vehicle using its compass and the compass direction in which the area lies in which the vehicle was last guided with the accuracy of the location determination during the guiding fulfilling the second minimum quality criterion, it is possible to turn the vehicle and move it towards the area using a compass based navigation approach.

In another aspect, the invention relates to a method for operating a robotic vehicle for movable operation in a work area as in independent claim 15. This method may for example be a computer implemented or it may be realized by an Application-Specific Integrated Circuit (ASIC).

In another aspect, the invention relates to a computer program product comprising computer executable instructions as in independent claim 16.

The above described examples and embodiments may be combined freely as long as the combinations are not mutually exclusive. It further has to be noted that in case above it is understood that any mentioned first minimum quality criterion is always the same first minimum quality criterion, any mentioned second minimum quality criterion is always the same second minimum quality criterion.

In the following, embodiments of the invention are described in greater detail in which
Figure 1 shows robotic vehicle performing an initialization process in a work area,
Figure 2 illustrates an exemplary skyplot as seen from the vehicle,
Figure 3 shows different combined skyplots at different points in time for the given grid point,
Figure 4 shows a first set of clustered grid points with respect to a given starting time point,
Figure 5 shows a second set of clustered grid points with respect to another a given starting time point,
Figure 6 is schematic of robotic vehicle,
Figure 7 is a flowchart of method for operating a robotic vehicle,
Figure 8 is a flowchart illustrating a clustering process.

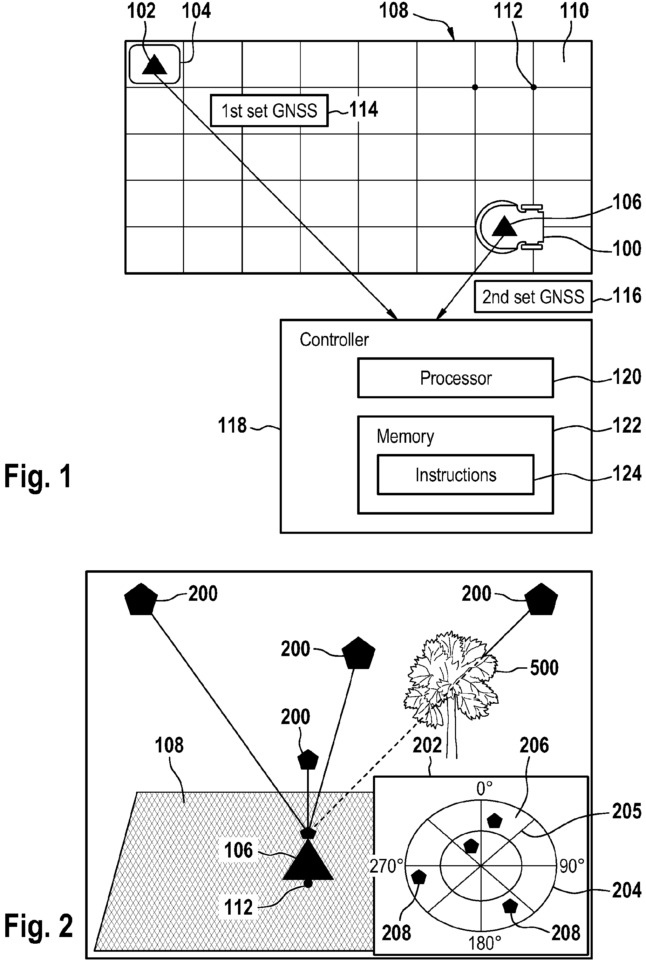

In the following similar features are denoted by the same reference numerals. Without restriction to generality in the following it is assumed that the robotic vehicle is a lawnmower and that the soil cultivation is the mowing of the lawn of a work area. Figure 1 illustrates a lawnmower 100 located within a work area 108 to be processed. The work area 108 is represented by a set of discretized coordinate grid points 112. As a result, the work area 108 is divided up into set of individual tiles 110.

The vehicle 100 is comprising a GNSS receiver 106 and a controller, which is illustrated in the inset of figure 1. The controller 118 comprises a processor 120 and a memory 122. That memory stores instructions 124, wherein execution of the instructions by the processor causes the vehicle for each grid point of a subset of the grid points at different first points in time performing an initialization process. The initialization process comprises receiving for given grid point at a certain time point a first set of GNSS signals from the vehicle base 104 which itself comprises a respective GNSS receiver 102. The base 104 is fixed and not movable, whereas the vehicle 100 can move over the lawn 108 to different grid points.

At each grid point and respective point in time the initialization process comprises receiving a first set of GNSS signals 114 from the GNSS receiver 102 and receiving a second set of GNSS signals 116 from the GNSS receiver 106. The first set of GNSS signals and the second set of GNSS signals were acquired at the same point in time by the respective GNSS receivers. The controller uses these two sets of GNSS signals using its instructions 124 to determine an accuracy of location determination based on a comparison of the signal qualities of the first and second set of GNSS signals 114 and 116, respectively. It will be understood that any further algorithms and computational approaches that will be discussed below are also performed by the controller using the instructions 124.

As illustrated in figure 2, at a given grid point 112 the receiver 106 receives the GNSS signals 116 and 114 from different satellites 200 located at various satellite positions in the sky above the vehicle and the base. For some of the satellites 200 there may exist a direct line of sight between the GNSS receiver 106 and the respective satellite, whereas some GNSS signals may be blocked by obstacles, like for example the tree 500 as illustrated in figure 2. As a consequence, the signal qualities of the second set of GNSS signals 116 may variety from satellites to satellite.

The location of the satellite positions in the sky above the vehicle and the base may be represented using a skyplot 202, as illustrated in the inset of figure 2. The skyplot 202 is represented by a coordinate grid 204 and 205 forming individual zones 206. The position of the symbols 208 inside the outer circle 204 the skyplot indicate the satellites 200 at two angles azimuth and elevation. The azimuth is drawn as central angle and the elevation is provided as circle radius. Different elevations correspond to individual grid circles of respectively different diameters. The individual azimuth angles are represented as the lines 205 originating from the center of the skyplot towards the outer circle.

In the following it is assumed that the base has a full view of all satellites in the sky above a certain minimum elevation angle. Further it is assumed, that either the first set of GNSS signals 114 is uncorrected by the controller 118 when comparing the signal qualities of the first set of GNSS signals and the second set of GNSS signals. Uncorrected means here that the skyplots of the base and the mower are not adapted with respect to each other due to a different perspective the respective GNSS receivers have on the same satellite constellations. This is because typically the mower 100 and the base 104 are located at rather short distances relative to each other in such a manner that the position of satellites within the respective skyplots only differ from each other within an irrelevant amount. The only requirement is that GNSS signals from different satellites as seen from the base and the mower can be associated with each other for performing the comparison of the signal qualities. However, in case the base 104 and the mower 100 are located at larger distances away from each other, the respective positions of the satellites 208 in the skyplots may be adjusted taking into account the different locations of the base and the mower.

With respect to the GNSS signals from a given satellite, these signals are compared with each other resulting in a quality number per satellite position. For example, the signal-to-noise ratios SN of the GNSS signals of a GNSS satellite at the base (SN1) and the mower (SN2) are used for that purpose. The quality number Q may then be given by the quotient Q=SN2/SN1. In case the quotient Q is close to 1, this corresponds to a good signal quality and in case the quotient Q is close to 0, this corresponds to a bad signal quality.

In a first step, for the given grid point any GNSS signals from satellite positions will be ignored for which the quality number Q does not fulfill a first quality criterion. For example, the first quality criterion may be that the signal quality needs to be higher than 0.8. In the below example the satellite located in the zone number 7 is excluded from any further accuracy calculations of the vehicle location because its quality number is below the quality criterion.

| Zone 206 | Quality Number Q |
|---|---|
| 3 | 0.95 |
| | |
| 9 | 0.85 |
| 13 | 0.9 |
| ... | ... |

From all remaining satellite positions and the corresponding GNSS signals a practical or hypothetical accuracy of a location determination is calculated. This results in the following assignment of time point t of GNSS data acquisition, grid point GP and accuracy A:

| t | GP | A |
|---|---|---|
| 27.04.2017, 08:43:12 | (12;56) | 5cm |
| 28.04.2017, 13:37:19 | (12;56) | 8cm |
| 27.04.2017, 08:44:46 | (12;59) | 5cm |
| ... | ... | ... |

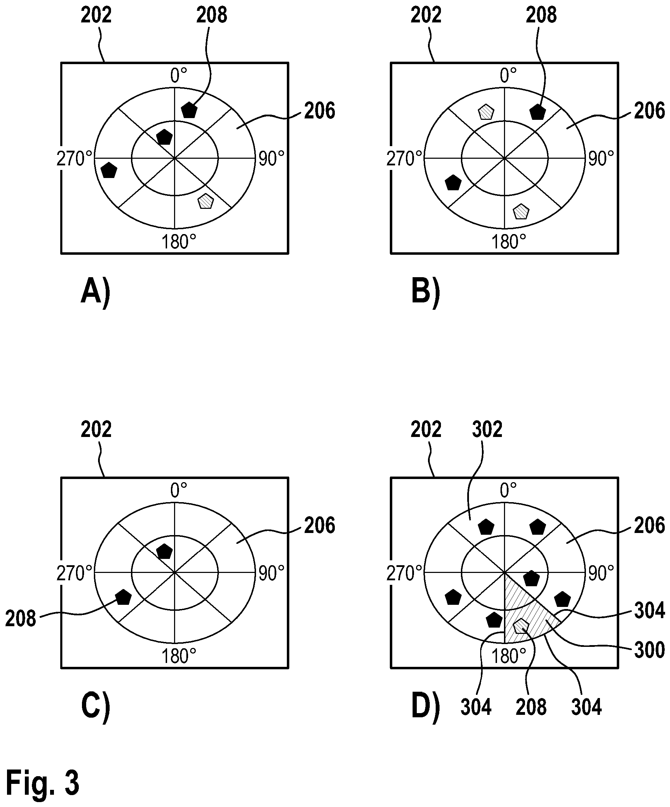

The content of the skyplot is illustrated in figure 3 for different points in time for a given grid point. The skyplots in figure 3 are skyplots, which already contain the combined information resulting from the comparison of the signal qualities of the first and second set of GNSS signals, i.e. they are based on the quality number Q. The reason for having the different skyplots in figure 3 is, that for example during the initialization phase the mower moved several times over the same given grid point, wherein each time a respective skyplot was recorded. This corresponds to for example the different time points as shown in the table above, 27.04.2017, 08:43:12 and 27.04.2017, 08:44:46. Another reason may be that during the actual mowing process the mower has also recorded the actually received second set of GNSS signals at the given grid point and is therefore able to generate additional skyplots from these signals.

In figure 3A, four satellite positions are illustrated, wherein one lower right zone of the skyplot contains a representation of satellite position 208 in a shaded manner. In the table above, this corresponds e.g. to the satellite in zone number 7 which due to its low-quality number was excluded from any further accuracy calculations. As a consequence, for all times in future that respective zone number 7 will be ignored irrespective if later on the quality number may improve or not.

It has to be noted that one may define scenarios in which that exclusion of such a zone is reversed. One example may be that during later travels of the mower over the grid point the quality number for that zone fulfills n successive times the first quality criterion. The scenario may then be that in case n>m, m being a predefined number, the exclusion of the zone is reversed. In this case, the original measurement regarding the signal quality of that respective GNSS signal which led to the exclusion of the zone may be disregarded, while optionally any previous signal qualities that were determined for the zone may be considered for a respective recalculation of the accuracy of the location determination for previous points in time.

Figure 3B shows the skyplot 202 of the same grid points at second point in time. Compared to the skyplot of figure 3A, the skyplot is representing a further satellite position that also has quality number that does not fulfill the first quality criterion (shaded position on the top left). Consequently, this zone will also be excluded from any future accuracy determinations.

From figure 3A it becomes clear, that regarding the given point in time three satellites can be used for determining and the accuracy of determination or calculation of the location of the mower at the given grid point. It has to be noted here that it is clear for the skilled person that in practice a position determination using only three satellites is not possible. Discussion is only for illustrative purposes and the skilled person will be able to extend the discussed principles to a number of satellites that is sufficient for performing a precise location determination.

Since in the figure 3B only two satellites are available for the respective determination of an accuracy of location determination, this means that the accuracy for the time point at which the data for figure 3B was acquired is lower than the accuracy for the time point at which the data for figure 3A was acquired. Comparing figures 3A and 3B also illustrates that it is possible that the satellite positions may vary within the zones 206 slightly. The size of the zones may be adapted according to the needs of accuracy and the number of time points for which GNSS signal acquisition is available or desired.

In figure 3C, only the signals from two satellites are available, all having signal qualities that are fulfilling the first quality criterion.

Figure 3D shows a different approach. Here, the skyplot is divided into a blank area 302 and a shaded area 300. The shaded area 300 comprises one satellite position 208 for which the signal quality does not fulfill the first quality criterion. This shaded area 300 is flanked by a set of further satellite positions 208 for which the signal quality does fulfill the first quality criterion. In case a sufficient number of satellites is available which are arranged in a favorable constellation around a satellite position for which signal quality does not fulfill the first quality criterion, boundaries 304 may be calculated that delimit the blank area 302 as an "area of good reception" from the shadowed area 300. Instead of excluding a specific zone from any further accuracy calculations of the vehicle location because its quality number is below the quality criterion, the approach in figure 3D permits the possibility to exclude extended specific areas 300 from such calculations (or vice verca restrict the calculations to the specific area 302).

After having determined for different time points and grid points the respectively achievable accuracy of the location determination of the mower, it is now the goal to determine for future points in time when to start a mowing process. Since satellite constellations repeat periodically within satellite repeat cycles and since satellite constellations or satellite positions are predictable for future points in time using GNSS Ephemerides or Almanacs, it is possible to perform a predicting process for at least some of the grid points and for forecasting the accuracy of the location determination for points in time in future.

However, this only holds true for grid points for which already GNSS signals were acquired in the past. For grid points that are not yet covered by the mower e.g. during the initialization phase, an interpolation may be performed. The interpolation is starting from grid points for which the accuracy of a location determination is already available, either from direct measurements or from the above-mentioned predictions.

As a result, for different points in time and grid points a dataset is obtained which comprises a mix of accuracy of location determinations, determined either from the direct measurements, predictions or interpolations.

From such a dataset, a clustering of grid points can be performed. For example, the clustering clusters all grid points together in a suitable manner such that within the next 24 hours, 48 hours or any arbitrary time span the mower is able to process the lawn by means of mowing operation and a respective movement trajectory that covers these clustered grid points. The clustering may select a suitable starting time point for the mowing operation.

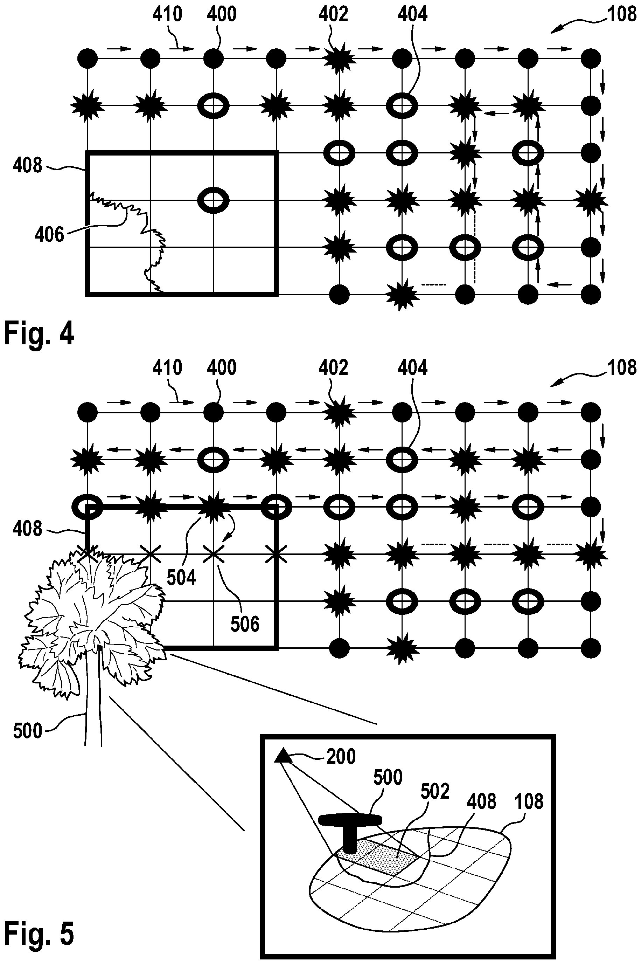

Figure 4 shows a first set of clustered grid points with respect to a given starting time point. Within the grid 108 the individual grid points are either marked with filled circles, empty circles or stars. Some of the grid points miss any markings. This is based on the assumption that when starting the mowing operation at a given time point and moving the mower along the trajectory 410, location determination is possible with sufficient high accuracy (accuracy of the location determination during the guiding fulfilling a second minimum quality criterion). The filled circles 400 represent grid points for which the accuracy of the possible location determination is available from satellite repeat cycle based prediction processes. The empty circles 404 represent grid points for which the accuracy of the possible location determination is available from broadcast Ephemerides calculations. The stars 402 represent grid points for which the accuracy of the possible location determination was determined by means of interpolation.

Further shown in figure 4 is an area of 408 which contains only one marked grid point. The reason is understandable from figure 5 which shows the area 108 is partially shadowed by an obstacle 500, a tree. In figure 4 the presence of the tree is illustrated by the contour line 406. The reason for the shadowing it is understandable from figure 5. Here, a satellite 200 is illustrated, wherein the obstacle 500 shadows the signals sent by the satellite 200 within shadow area of 502 of the work area 108. The finer the discretization of the work area with coordinate grid points, and the more data on achievable location accuracy is available in a clustering, the more precise will be the exact shape of the shadow area of 502. Since in figure 4 the grid is rough and the amount of data on achievable location accuracy within the are 408 is low, the trajectory 410 must completely omit area 408 since accurate GNSS based navigation is not possible within that area for the given time point of starting the mowing operation.

Regarding figure 5 it is assumed, that still within area of 408 a precise location determination of the mower is not possible. However, since for the grid points of the border line of area 408 additional data on achievable location accuracy is available. The respective trajectory 410 may be modified compared to figure 4 to also cover this area 408.

It has to be noted here that it even may be possible that the mower is moving into the area of 408 even though a GNSS based navigation it may not be a reliable enough anymore. For the grid points indicated by crosses in figure 5, a predicting process may be used that additionally takes into account that the position determination is additionally performed using a deduced reckoning position estimate. For example, when the mower is located at grid point 504, odometry may be used to move the mower to grid point 506. Just considering the second minimum quality criterion, in the predicting process the grid point 506 would have been excluded because the accuracy of the location determination does not fulfill a second minimum quality criterion. However, since a lower quality in location determination using GNSS could be improved using odometry, it is additionally considered if the accuracy of the location determination does fulfill the second minimum quality criterion. If this is the case, the associated accuracy of location determination is adjusted taking into account that the position determination is additionally performed using a deduced reckoning position estimate obtained from a deduced reckoning navigation device of the vehicle. This approach is only applied in case the respective grid point is located within a maximum predefined distance from a grid point for which the unadjusted associated accuracy of location determination fulfills the second minimum quality criterion. This minimizes the risk that due to accumulating errors arising from the deduced reckoning navigation the effective accuracy of location determination is decreasing so much that in practice the achieved accuracy is not acceptable any more, e.g. not fulfilling the second minimum quality criterion any more.

It further has to be noted that the above mentioned second minimum quality criterion may be tightened up for certain grid points that are defining the boundaries confining the work area 108. The reason is that under no circumstances the mower is allowed to leave the working area of 108. By tightening up the second minimum quality criterion, the location determination for these grid points at the boundaries can be performed with even higher accuracy thus minimizing the risk that due to navigational errors the mower is unintentionally leaving the area 108.

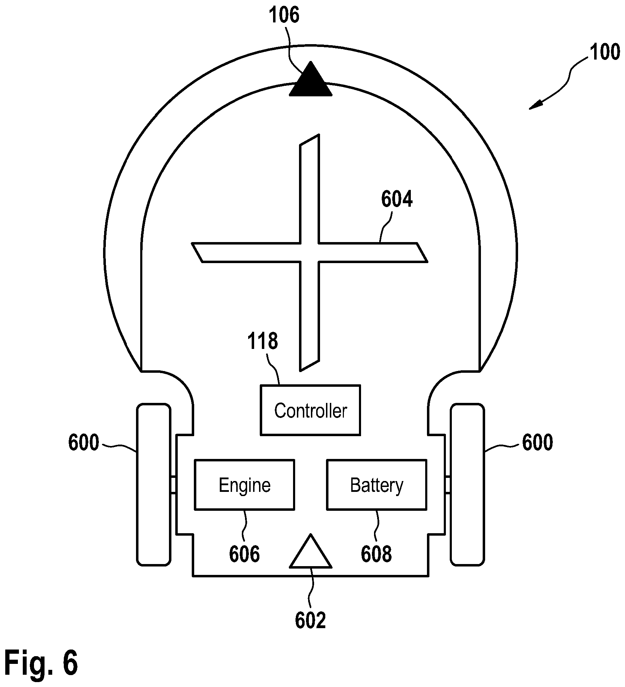

Figure 6 illustrates a schematic of a lawnmower 100 which comprises the GNSS receiver 106 and a further sensor 602 that may be used as a deduced reckoning navigation device. For example, the sensor 602 is a camera or a radar sensor which is able to acquire precisely a movement and/or location of the mower 100. The rotation of the wheels 600 may also be used for obtaining a deduced reckoning position estimate. The lawnmower 100 further comprises a rotating blade 604 for cutting grass and the controller 118. An engine 606 is powered by a battery 608, wherein the engine 606 is coupled to the wheels 604 moving the mower from the one grid points to the next grid point. The battery 608 may be recharged using the base which was discussed above with respect to figure 1.

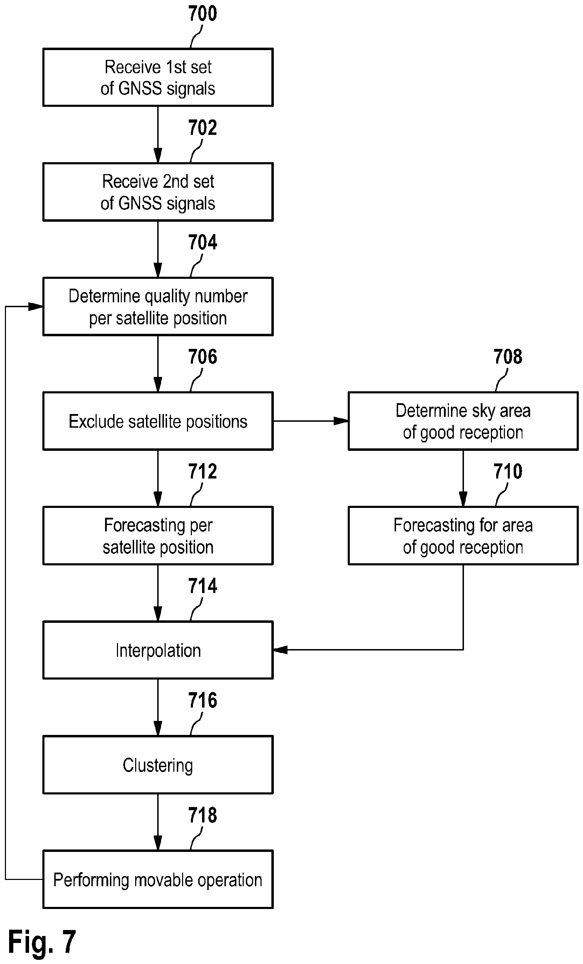

Figure 7 is a flowchart of operating a robotic vehicle for movable operation in a work area. The method starts with step 700 and reception of the first set of GNSS signals from the vehicle base. In parallel in step 702, a second set of GNSS signals is received from the GNSS receiver of the vehicle. Thereupon, in step 704 a comparison is made of the signal qualities of the first and second set of GNSS signals and a quality number per satellite position is derived.

Satellite positions which have a quality number that does not fulfill the predefined quality criterion are then excluded in this step 706. For the remaining satellites and the respective GNSS signals an accuracy of a location determination is then determined and stored together with the point in time of GNSS signal reception and grid point in a dataset.

Step 708 and 710 are optional: in step 708 a sky area of good reception is determined which comprises at least some of the satellite positions for which the quality number of that satellite positions fulfills a respective minimum quality criterion. Thereupon, in step 710 for this area of good reception a forecasting of receiving GNSS signals from satellites located in this area of good reception is being made for forecasting an accuracy of a location determination for points in time future to the respective point in time when the signals were required in step 700 and 702. The forecasting is made for example using Ephemerides, Almanacs and satellite repeat cycles applied on the first or second set of GNSS signals received in steps 700 and 702. For this forecasting, a satellite is allowed to appear anywhere within the whole sky area of good reception. The forecasted accuracy of location determination is then stored together with the future point in time and grid point in the dataset.

In case steps 708 and 710 are not used, the method continues after step 706 with step 712 and the forecasting of an accuracy of a location determination for points in time future to the respective point in time when the signals were acquired in step 700 and 702. The forecasting is made for example using Ephemerides, Almanacs and satellite repeat cycles applied on the first or second set of GNSS signals received in steps 700 and 702. Compared to the forecasting that was made with respect to steps 708 and 710, this forecasting is based on the discrete satellite positions and sky areas around these satellite positions: in steps 700 and 702 the first and second GNSS signals were received from satellites that were located at certain satellite positions in the sky above the base and the vehicle. In step 712 a forecasting of a reception of first or second GNSS signals for future points in time from satellites located at a sky area around these certain satellite positions is made. From this forecasting, an accuracy of location determination is then determined and stored together with the future point in time and grid point in the dataset.

In optional step 714 an interpolation is being made for at least some of the grid points for which the accuracy of a location determination for certain points in time future to the respective point in time of reception is yet unavailable. I.e. for some points in time in the future, the accuracy of a location determination may already available and for some others not. In the latter case the interpolation may be used to complete the dataset regarding further future time points. The interpolation is considering grid points for which the accuracy of an already available location determination for future points in time is available. The interpolation is resulting in estimated accuracies of location determination for the grid points for which the interpolation was performed.

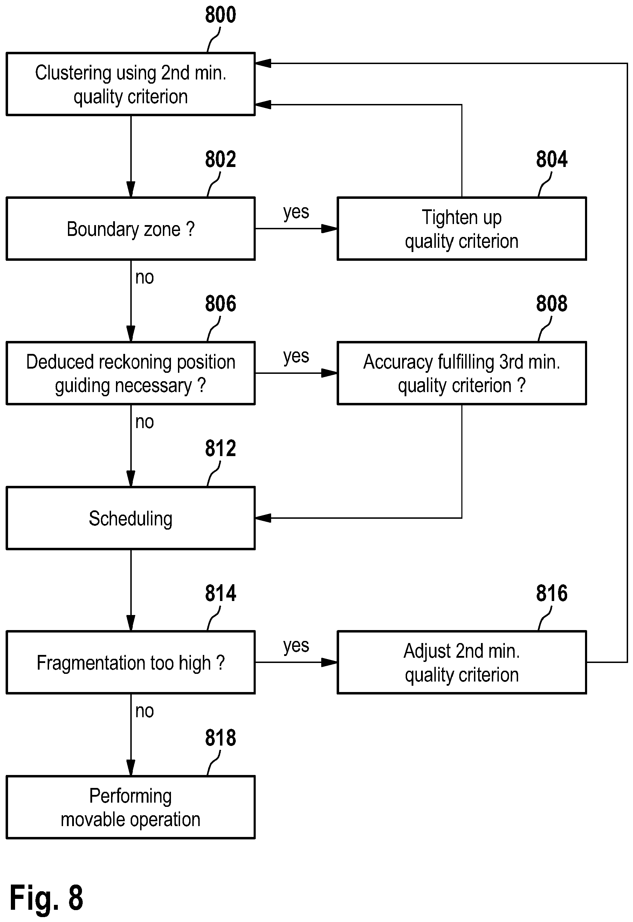

Step 716 comprises a clustering which will be described in more detail in figure 8. In essence, the clustering is resulting in one or more sets of clustered grid points, wherein for each set of the clustered grid points starting from a respective point in time moving of the vehicle along said set of clustered grid points guided using GNSS signals received the planning of the movable operation comprises clustering determination during the guiding fulfilling the second minimum quality criterion.

In step 718 the actual movable operation is performed which includes a planning of the operation. The planning comprises a scheduling of the movable operation for obtaining a movement trajectory of the mower for performing the movable operation, the scheduling comprising selecting one or more of the sets of clustered grid points, the movement trajectory comprising the grid points of the one or more sets of clustered grid points.

During the performance of the mowing operation, for each grid point traveled by the vehicle new GNSS signals may be received from the base and the vehicle receiver. All the signals may then be subject to the method steps 704-716, which are repeated accordingly. The more often this process is repeated, the more precise the guidance of the vehicle can be even in the presence of shadows from full satellite reception because the dataset representing the grid points and associated accuracies of the location determination and time points is more and more filled such that even for critical grid points the clustering is able to find an appropriate point in time for which guidance of the vehicle is possible with the required accuracy.

Figure 8 is a flowchart illustrating a method of clustering of grid points. The method starts in step 800 with the clustering according to a second minimum quality criterion: the goal is that sets of clustered grid points are obtained that - starting from a certain future time point - can be traveled by the vehicle and for which (during this travel) a guidance of the vehicle using GNSS signals received during said traveling (movement) is possible with an accuracy of the location determination during the guiding fulfilling a certain (second) minimum quality criterion. In this manner, it is ensured that GNSS based guidance, eventually assisted by deduced reckoning position estimates, is possible at a decent positioning quality.

In optional step 802 it is checked if grid points are forming a boundary zone confining the work area. If this is the case, the method continues with step 804 in which the second minimum quality criterion is tightened up and the method jumps back to step 800 which then uses for the grid points of the boundary zone the tightened up (enforced) quality criterion. It has to be noted here, that this procedure may also be reversed in that first all grid points forming the boundaries are identified and then for these identified grid points the quality criterion is tightened up. For the remaining grid points the quality criterion is set to the (non-tightened-up) second minimum quality criterion and thereupon the clustering process is performed. With this approach, a repetition may not be necessary.

In step 806 grid points are identified for which a deduced reckoning position guiding may be necessary. Generally spoken, these may be any grid points which do not yet fulfill the second minimum quality criterion. For the identified grid points, in step 808 it is checked whether the grid points are located within a maximum predefined distance from a grid point for which the unadjusted associated accuracy of location determination fulfills the second minimum quality criterion. In case the check is positive, for a grid point the associated accuracy of location determination is adjusted taking into account that the position determination is additionally performed using a deduced reckoning position estimate obtained from a deduced reckoning navigation device of the vehicle.

The method continues in step 812 which is a scheduling of the movable operation for obtaining a movement trajectory of the vehicle for performing the movable operation, the scheduling comprising selecting one or more of the sets of clustered grid points, the movement trajectory comprising the grid points of the one or more sets of clustered grid points. Each set of clustered grid points comprises respective time points and accuracies.

In step 814 it is additionally checked wherein the movement trajectory obtained for a single contiguous movable operation results in a fragmentation degree of the work area. The fragmentation degree is describing the degree of fragmentation of the work area with respect to subareas of the area covered by the trajectory. In case the fragmentation degree is above a predefined fragmentation threshold, the second minimum quality criterion is relaxed within specified limits in step 816 and the clustering process is repeated starting again from step 800. This repetition is performed with a more and more relaxing the second quality criterion until the degree of fragmentation is below the predefined fragmentation threshold.

Finally, in step 818 the movable operation is performed.

### List of reference numerals

100 vehicle
102 GNSS receiver
104 base
106 GNSS receiver
108 work area
110 tile
112 grid point
114 first set of GNSS signals
116 second set of GNSS signals
118 controller
120 processor
122 memory
124 instructions
200 satellite
202 skyplot
204 circle
205 line
206 zone
208 representation of a satellite
300 shadow area
302 area of good reception
304 boundary
400 grid point
402 grid point
404 grid point
406 contour line
408 area
410 trajectory
500 tree
502 shadow area
504 grid point
506 grid point
600 wheel
602 sensor
604 blade
606 engine
608 battery

## Claims

1. A robotic vehicle (100) for movable operation in a work area (108), the movable operation comprising a soil cultivation, the work area (108) being represented by a set of discretized coordinate grid points (112), the vehicle (100) comprising a Global Navigation Satellite System, GNSS, receiver (106) and a controller (118), the controller (118) comprising a memory (122) and a processor, the memory (122) comprising instructions (124), wherein execution of the instructions (124) by the processor causes the vehicle (100) for each grid point of a subset of the grid points (112) at different first points in time performing an initialization process, the initialization process comprising:
- receiving at a first point in time of the different points in time a first set of GNSS signals (114) from a fixed vehicle base (104), said vehicle base (104) being spaced apart from the vehicle (100) and comprising a GNSS receiver for receiving the first set of GNSS signals,
- receiving at said first point in time a second set of GNSS signals (116) from the GNSS receiver (106) of the vehicle,
- determining an accuracy of a location determination, the location determination being based on the second set of GNSS signals (116), the determination of the accuracy being based on a comparison of the signal qualities of the first set of GNSS signals (114) and the second set of GNSS signals (116),
wherein execution of the instructions (124) by the processor causes the vehicle (100) further for performing a predicting process for at least some of the grid points (112) of the subset, the predicting process forecasting the accuracy of the location determination for points in time future to the respective first point in time, wherein the predicting process forecasting the accuracy of the location determination for the at least some of the grid points (112) of the subset is using at least one of GNSS Ephemerides, Almanacs and satellite repeat cycles applied on the first (114) or second set of GNSS signals (116) received at the respective first point in time,
the predicting process further comprising an interpolation, the interpolation being performed for at least some of the grid points (112) for which the accuracy of a location determination for points in time future to the respective first point in time is unavailable, the interpolation considering grid points (112) for which the accuracy of a location determination for points in time future to the respective first point in time is available, the interpolation resulting in estimated accuracies of location determination for the grid points (112) for which the interpolation was performed.

2. The robotic vehicle (100) of claim 1, wherein the first and second GNSS signals are received from satellites (200) that are located at certain satellite positions (208) in the sky above the base (104) and the vehicle (100), the comparison of the signal qualities of the first set of GNSS signals (114) and the second set of GNSS signals (116) resulting in a quality number per satellite position (208).

3. The robotic vehicle (100) of any of the previous claims, wherein the at least one of GNSS Ephemerides, Almanacs and satellite repeat cycles being used to predict at which point in time future to the respective first point in time a satellite constellation is available again that reflects the satellite constellation at the respective first point in time for the at least some of the grid points (112) of the subset.

4. The robotic vehicle (100) of any of the previous claims, the predicting process forecasting the accuracy of the location determination comprising: forecasting a reception of first or second GNSS signals for said points in time future to the first point in time from satellites (200) located at a sky area around the certain satellite positions (208), the accuracy of the location determination being forecasted using the forecasted reception of the first or second GNSS signals.

5. The robotic vehicle (100) of claim 4, wherein per satellite position (208) the forecasting of the accuracy of the location determination is performed using
- the forecasted reception of the first GNSS signals weighted by the quality number of that satellite position (208) or
- the forecasted reception of the second GNSS signals excluding GNSS signals from satellite positions (208) for which the quality number does not fulfill a first minimum quality criterion.

6. The robotic vehicle (100) of claims 4 or 5, the sky above the base (104) and the vehicle (100) being represented by a set of discretized zones (206), the sky area around a certain satellite position (208) being confined by the boundaries which confine the zone (206) in which the satellite position (208) is located, wherein the predicting process is further comprising determining a sky area of good reception (302) which comprises at least some of the certain satellite positions (208) for which the quality number of that satellite position fulfills a first minimum quality criterion, the sky area around a certain satellite position being confined by the boundaries which confine the sky area of good reception (302).

7. The robotic vehicle (100) of any of the previous claims, wherein execution of the instructions (124) by the processor further causes the vehicle (100) for planning the movable operation for future points in time based on:
at least some of the grid points (112) for which an accuracy of the location determination is available and the accuracy of the location determination at each one of said grid points (112).

8. The robotic vehicle (100) of claim 7, wherein the determination of the accuracy of the location determination is only considering GNSS signals from satellite positions (208) for which the quality number of that satellite positions (208) fulfills a first minimum quality criterion, wherein optionally in case with respect to a given grid point the quality number for a certain satellite position (208) does not fulfill a first minimum quality criterion, for that grid point any GNSS signals from said satellite position (208) are excluded for the planning of the movable operation.

9. The robotic vehicle (100) of any of claims 7 to 8, wherein the planning of the movable operation comprises clustering of at least some of the grid points (112) for which the accuracy of the location determination is available, the clustering resulting in one or more sets of clustered grid points (112), wherein for each set of the clustered grid points (112) starting from a respective second point in time moving of the vehicle (100) along said set of clustered grid points (112) guided using a third set of GNSS signals received from the GNSS receiver (106) during said movement is possible with an accuracy of the location determination during the guiding fulfilling a second minimum quality criterion.

10. The robotic vehicle (100) of claim 9, the work area (108) comprising boundaries confining the work area (108), wherein for grid points (112) lying within a predefined boundary zone bordering the boundaries the second minimum quality criterion is tightened up.

11. The robotic vehicle (100) of claim 9 or 10, at least one of the predicting process and the clustering comprising for a grid point (112) adjusting the associated accuracy of location determination taking into account that the position determination is additionally performed using a deduced reckoning position estimate obtained from a deduced reckoning navigation device (602) of the vehicle (100), wherein optionally the taking into account that the position determination is additionally performed using the deduced reckoning position estimate is restricted to grid points (112) located within a maximum predefined distance from a grid point (112) for which the unadjusted associated accuracy of location determination fulfills the second minimum quality criterion.

12. The robotic vehicle (100) of any of the previous claims 9-11, the planning of the movable operation comprising scheduling the movable operation for obtaining a movement trajectory (410) of the vehicle (100) for performing the movable operation, the scheduling comprising selecting one or more of the sets of clustered grid points (112), the movement trajectory (410) comprising the grid points (112) of the one or more sets of clustered grid points (112).

13. The robotic vehicle (100) of claim 12, wherein execution of the instructions (124) by the processor further causes the vehicle (100) for performing
- a movement of the vehicle (100) to said selected one or more of the sets of clustered grid points (112),
- repeating the steps of the initialization process during the movement for the grid points (112) traveled during the movement and with the first point in time being the actual point in time of movement on the respective grid point (112).

14. The robotic vehicle (100) of claim 12 or 13, wherein the movement trajectory (410) obtained for a single contiguous movable operation results in a fragmentation degree of the work area (108), the fragmentation degree describing the degree of fragmentation of the work area (108) with respect to subareas of the area covered by the trajectory (410), wherein in case the fragmentation degree is above a predefined fragmentation threshold, the second minimum quality criterion is successively relaxed within specified limits until the degree of fragmentation is below the predefined fragmentation threshold.

15. A method for operating a robotic vehicle (100) for movable operation in a work area (108), the movable operation comprising a soil cultivation, the work area (108) being represented by a set of discretized coordinate grid points (112), the vehicle (100) comprising a Global Navigation Satellite System, GNSS, receiver (106) the method comprising performing for each grid point of a subset of the grid points (112) at different first points in time an initialization process, the initialization process comprising:
- receiving at a first point in time of the different points in time a first set of GNSS signals (114) from a fixed vehicle base (104), the vehicle base (104) being spaced apart from the vehicle (100), said vehicle base (104) being spaced apart from the vehicle (100) and comprising a GNSS receiver for receiving the first set of GNSS signals,
- receiving at said first point in time a second set of GNSS signals (116) from the GNSS receiver (106) of the vehicle,
- determining an accuracy of a location determination, the location determination being based on the second set of GNSS signals (116), the determination of the accuracy being based on a comparison of the signal qualities of the first set of GNSS signals (114) and the second set of GNSS signals (116),
wherein execution of the instructions (124) by the processor causes the vehicle (100) further for performing a predicting process for at least some of the grid points (112) of the subset, the predicting process forecasting the accuracy of the location determination for points in time future to the respective first point in time, wherein the predicting process forecasting the accuracy of the location determination for the at least some of the grid points (112) of the subset is using at least one of GNSS Ephemerides, Almanacs and satellite repeat cycles applied on the first (114) or second set of GNSS signals (116) received at the respective first point in time,
the predicting process further comprising an interpolation, the interpolation being performed for at least some of the grid points (112) for which the accuracy of a location determination for points in time future to the respective first point in time is unavailable, the interpolation considering grid points (112) for which the accuracy of a location determination for points in time future to the respective first point in time is available, the interpolation resulting in estimated accuracies of location determination for the grid points (112) for which the interpolation was performed.

16. A computer program product comprising computer executable instructions (124) to cause the robotic vehicle of any of claims 1 to 14 to execute the steps of the method of claim 15.

## Patentansprüche

1. Roboterfahrzeug (100) für einen beweglichen Betrieb in einem Arbeitsbereich (108), wobei der bewegliche Betrieb eine Bodenbearbeitung umfasst, der Arbeitsbereich (108) von einem Satz von diskretisierten Koordinaten-Gitterpunkten (112) dargestellt wird, das Fahrzeug (100) einen Empfänger (106) eines globalen Navigationssatellitensystems, GNSS, und einen Controller (118) umfasst, der Controller (118) einen Speicher (122) und einen Prozessor umfasst, der Speicher (122) Befehle (124) umfasst, wobei eine Ausführung der Befehle (124) durch den Prozessor bewirkt, dass das Fahrzeug (100) für jeden Gitterpunkt eines Teilsatzes der Gitterpunkte (112) zu unterschiedlichen ersten Zeitpunkten einen Initialisierungsprozess durchführt, wobei der Initialisierungsprozess umfasst:
- Empfangen eines ersten Satzes von GNSS-Signalen (114) aus einer festen Fahrzeugbasis (104) zu einem ersten Zeitpunkt von den unterschiedlichen Zeitpunkten, wobei die Fahrzeugbasis (104) von dem Fahrzeug (100) beabstandet ist und einen GNSS-Empfänger zum Empfangen des ersten Satzes von GNSS-Signalen umfasst,
- Empfangen eines zweiten Satzes von GNSS-Signalen (116) aus dem GNSS-Empfänger (106) des Fahrzeugs zu dem ersten Zeitpunkt,
- Bestimmen einer Genauigkeit einer Ortsbestimmung, wobei die Ortsbestimmung auf dem zweiten Satz von GNSS-Signalen (116) basiert, wobei die Bestimmung der Genauigkeit auf einem Vergleich der Signalqualitäten des ersten Satzes von GNSS-Signalen (114) und des zweiten Satzes von GNSS-Signalen (116) basiert,
wobei die Ausführung der Befehle (124) durch den Prozessor bewirkt, dass das Fahrzeug (100) ferner einen Prädiktionsprozess für zumindest einen Teil von den Gitterpunkten (112) des Teilsatzes durchführt, wobei der Prädiktionsprozess die Genauigkeit der Ortsbestimmung für Zeitpunkte prognostiziert, die weiter in der Zukunft liegen als der jeweilige erste Zeitpunkt, wobei für den Prädiktionsprozess, der die Genauigkeit der Ortsbestimmung für zumindest den Teil von den Gitterpunkten (112) des Teilsatzes prognostiziert, GNSS Ephemerides und/oder Almanacs und/oder Satellitenwiederholungszyklen verwendet werden, die auf den ersten (114) oder den zweiten Satz von GNSS-Signalen (116), der zu dem jeweiligen ersten Zeitpunkt empfangen wird, angewendet werden,
wobei der Prädiktionsprozess ferner eine Interpolation umfasst, wobei die Interpolation für zumindest einen Teil von den Gitterpunkten (112) durchgeführt wird, für welche die Genauigkeit einer Ortsbestimmung für Zeitpunkte, die weiter in der Zukunft liegen als der jeweilige erste Zeitpunkt, nicht verfügbar ist, wobei für die Interpolation Gitterpunkte (112) berücksichtigt werden, für welche die Genauigkeit einer Ortsbestimmung für Zeitpunkte, die weiter in der Zukunft liegen als der jeweilige erste Zeitpunkt, verfügbar ist, wobei die Interpolation für die Gitterpunkte (112), für welche die Interpolation durchgeführt wurde, geschätzte Genauigkeiten der Ortsbestimmung liefert.

2. Roboterfahrzeug (100) nach Anspruch 1, wobei die ersten und die zweiten GNSS-Signale aus Satelliten (200) empfangen werden, die sich an bestimmten Satellitenpositionen (208) am Himmel über der Basis (104) und dem Fahrzeug (100) befinden, wobei der Vergleich der Signalqualitäten des ersten Satzes von GNSS-Signalen (114) und des zweiten Satzes von GNSS-Signalen (116) eine Qualitätszahl pro Satellitenposition (208) zum Ergebnis hat.

3. Roboterfahrzeug (100) nach einem der vorangehenden Ansprüche, wobei GNSS Ephemerides und/oder Almanacs und/oder Satellitenwiederholungszyklen verwendet wird/werden, um vorauszusagen, zu welchem Zeitpunkt, der weiter in der Zukunft liegt als der jeweilige erste Zeitpunkt, für zumindest den Teil von den Gitterpunkten (112) des Teilsatzes eine Satellitenkonstellation wieder verfügbar sein wird, welche die Satellitenkonstellation zu dem jeweiligen ersten Zeitpunkt reflektiert.

4. Roboterfahrzeug (100) nach einem der vorangehenden Ansprüche, wobei der Prädiktionsprozess, der die Genauigkeit der Ortsbestimmung prognostiziert, umfasst: Prognostizieren eines Empfangs von ersten oder zweiten GNSS-Signalen aus Satelliten (200), die sich in einem Bereich um die bestimmten Satellitenpositionen (208) am Himmel befinden, für die Zeitpunkte, die weiter in der Zukunft liegen als der erste Zeitpunkt, wobei die Genauigkeit der Ortsbestimmung unter Verwendung des prognostizierten Empfangs der ersten oder zweiten GNSS-Signale prognostiziert wird.

5. Roboterfahrzeug (100) nach Anspruch 4, wobei für die Durchführung der Prognostizierung der Genauigkeit der Ortsbestimmung pro Satellitenposition (208) durchgeführt Folgendes verwendet wird:
- der prognostizierte Empfang der ersten GNSS-Signale, gewichtet mit der Qualitätszahl dieser Satellitenposition (208), oder
- der prognostizierte Empfangs der zweiten GNSS-Signale, ausschließlich von GNSS-Signalen von Satellitenpositionen (208), für welche die Qualitätszahl ein erstes Mindestqualitätskriterium nicht erfüllt, durchgeführt wird.

6. Roboterfahrzeug (100) nach den Ansprüchen 4 oder 5, wobei der Himmel über der Basis (104) und dem Fahrzeug (100) von einem Satz von diskretisierten Zonen (206) dargestellt wird, wobei der Bereich um eine bestimmte Satellitenposition (208) am Himmel von den Rändern begrenzt wird, welche die Zone (206) begrenzen, in der die Satellitenposition (208) liegt, wobei der Prädiktionsprozess ferner ein Bestimmen eines Bereichs des Himmels mit gutem Empfang (302) umfasst, der zumindest einige von den bestimmten Satellitenpositionen (208) umfasst, bei denen die Qualitätszahl dieser Satellitenposition ein erstes Mindestqualitätskriterium erfüllt, wobei der Bereich um eine bestimmte Satellitenposition am Himmel von den Rändern begrenzt wird, die den Bereich des Himmels mit gutem Empfang (302) begrenzen.

7. Roboterfahrzeug (100) nach einem der vorangehenden Ansprüche, wobei die Ausführung der Befehle (124) durch den Prozessor ferner bewirkt, dass das Fahrzeug (100) für die Planung des beweglichen Betriebs für in der Zukunft liegende Zeitpunkte Folgendes als Basis nimmt: zumindest einen Teil von den Gitterpunkten (112), für die eine Genauigkeit der Ortsbestimmung verfügbar ist, und die Genauigkeit der Ortsbestimmung an jedem von diesen Gitterpunkten (112).

8. Roboterfahrzeug (100) nach Anspruch 7, wobei für die Bestimmung der Genauigkeit der Ortsbestimmung nur GNSS-Signale von Satellitenpositionen (208) berücksichtigt werden, für welche die Qualitätszahl der Satellitenpositionen (208) ein erstes Mindestqualitätskriterium erfüllt, wobei optional in einem Fall, wo die Qualitätszahl für eine bestimmte Satellitenposition (208) in Bezug auf einen bestimmten Gitterpunkt ein erstes Mindestqualitätskriterium nicht erfüllt, für diesen Gitterpunkt alle GNSS-Signale von dieser Satellitenposition (208) für die Planung des beweglichen Betriebs ausgeschlossen werden.

9. Roboterfahrzeug (100) nach einem der Ansprüche 7 bis 8, wobei die Planung des beweglichen Betriebs die Bildung eines Clusters aus zumindest einem Teil der Gitterpunkte (112), für welche die Genauigkeit der Ortsbestimmung verfügbar ist, umfasst, wobei die Bildung des Clusters einen oder mehrere Sätze von geclusterten Gitterpunkten (112) zum Ergebnis hat, wobei für jeden Satz aus den geclusterten Gitterpunkten (112), beginnend ab einem jeweiligen zweiten Zeitpunkt, eine Bewegung des Fahrzeugs (100) entlang des Satzes von geclusterten Gitterpunkten (112), geführt unter Verwendung eines dritten Satzes von GNSS-Signalen, die während der Bewegung aus dem GNSS-Empfänger (106) empfangen werden, möglich ist, wobei eine Genauigkeit der Ortsbestimmung während des Führens ein zweites Mindestqualitätskriterium erfüllt.

10. Roboterfahrzeug (100) nach Anspruch 9, wobei der Arbeitsbereich (108) Ränder umfasst, die den Arbeitsbereich (108) begrenzen, wobei für Gitterpunkte (112), die innerhalb einer vordefinierten Randzone liegen, die an die Ränder angrenzt, das zweite Mindestqualitätskriterium verschärft ist.

11. Roboterfahrzeug (100) nach Anspruch 9 oder 10, wobei der Prädiktionsprozess und/oder die Bildung eines Clusters umfassen, dass für einen Gitterpunkt (112) die mit ihm verbundene Genauigkeit der Ortsbestimmung unter Berücksichtigung dessen angepasst wird, dass die Positionsbestimmung zusätzlich unter Verwendung eines Positionsschätzwerts durchgeführt wird, der aus einer aus einer Koppelnavigationsvorrichtung (602) des Fahrzeugs (100) berechneten Ableitung erhalten wird, wobei die Berücksichtigung dessen, dass die Positionsbestimmung zusätzlich unter Verwendung des aus einer Ableitung errechneten Positionsschätzwerts durchgeführt wird, optional auf Gitterpunkte (112) beschränkt ist, die innerhalb eines maximalen vordefinierten Abstands von einem Gitterpunkt (112) liegen, für den die mit ihm verbundene nicht-angepasste Genauigkeit der Ortsbestimmung das zweite Mindestqualitätskriterium erfüllt.

12. Roboterfahrzeug (100) nach einem der vorangehenden Ansprüche 9-11, wobei die Planung des beweglichen Betriebs eine Ablaufplanung des beweglichen Betriebs umfasst, um eine Bewegungsbahn (410) des Fahrzeugs (100) für eine Durchführung des beweglichen Betriebs zu erhalten, wobei die Ablaufplanung ein Auswählen eines oder mehrerer von den Sätzen geclusterter Gitterpunkte (112) umfasst, wobei die Bewegungsbahn (410) die Gitterpunkte (112) des einen oder der mehreren Sätze von geclusterten Gitterpunkten (112) umfasst.

13. Roboterfahrzeug (100) nach Anspruch 12, wobei die Ausführung der Befehle (124) durch den Prozessor ferner bewirkt, dass das Fahrzeug (100) durchführt:
- eine Bewegung des Fahrzeugs (100) zu dem ausgewählten einen Satz oder den mehreren ausgewählten Sätzen von geclusterten Gitterpunkten (112),
- Wiederholen der Schritte des Initialisierungsprozesses während der Bewegung für die während der Bewegung angefahrenen Gitterpunkte (112), und wobei der erste Zeitpunkt der tatsächliche Zeitpunkt ist, wo die Bewegung an dem jeweiligen Gitterpunkt (112) stattfindet.

14. Roboterfahrzeug (100) nach Anspruch 12 oder 13, wobei die Bewegungsbahn (410), die für einen einzelnen ununterbrochenen beweglichen Betrieb erhalten wird, einen Fragmentierungsgrad des Arbeitsbereichs (108) zum Ergebnis hat, wobei der Fragmentierungsgrad den Grad der Fragmentierung des Arbeitsbereichs (108) in Bezug auf Teilbereiche des von der Bahn (410) abgedeckten Bereichs beschreibt, wobei in einem Fall, wo der Fragmentierungsgrad über einem vordefinierten Fragmentierungsschwellenwert liegt, das zweite Mindestqualitätskriterium sukzessive innerhalb spezifizierter Grenzen gelockert wird, bis der Grad der Fragmentierung unter dem vordefinierten Fragmentierungsschwellenwert liegt.

15. Verfahren zum Betreiben eines Roboterfahrzeugs (100) für einen beweglichen Betrieb in einem Arbeitsbereich (108), wobei der bewegliche Betrieb eine Bodenbearbeitung umfasst, der Arbeitsbereich (108) von einem Satz von diskretisierten Koordinaten-Gitterpunkten (112) dargestellt wird, das Fahrzeug (100) einen Empfänger (106) eines globalen Navigationssatellitensystems, GNSS, umfasst, wobei das Verfahren das Durchführen eines Initialisierungsprozesses für jeden Gitterpunkt eines Teilsatzes der Gitterpunkte (112) zu unterschiedlichen ersten Zeitpunkten umfasst, wobei der Initialisierungsprozess umfasst:
- Empfangen eines ersten Satzes von GNSS-Signalen (114) aus einer festen Fahrzeugbasis (104) zu einem ersten Zeitpunkt von den unterschiedlichen Zeitpunkten, wobei die Fahrzeugbasis (104) von dem Fahrzeug (100) beabstandet ist, wobei die Fahrzeugbasis (104) von dem Fahrzeug (100) beabstandet ist und einen GNSS-Empfänger zum Empfangen des ersten Satzes von GNSS-Signalen umfasst,
- Empfangen eines zweiten Satzes von GNSS-Signalen (116) aus dem GNSS-Empfänger (106) des Fahrzeugs zu dem ersten Zeitpunkt,
- Bestimmen einer Genauigkeit einer Ortsbestimmung, wobei die Ortsbestimmung auf dem zweiten Satz von GNSS-Signalen (116) basiert, wobei die Bestimmung der Genauigkeit auf einem Vergleich der Signalqualitäten des ersten Satzes von GNSS-Signalen (114) und des zweiten Satzes von GNSS-Signalen (116) basiert,
wobei die Ausführung der Befehle (124) durch den Prozessor bewirkt, dass das Fahrzeug (100) ferner einen Prädiktionsprozess für zumindest einen Teil von den Gitterpunkten (112) des Teilsatzes durchführt, wobei der Prädiktionsprozess die Genauigkeit der Ortsbestimmung für Zeitpunkte, die weiter in der Zukunft liegen als der jeweilige erste Zeitpunkt, prognostiziert, wobei für den Prädiktionsprozess, der die Genauigkeit der Ortsbestimmung für zumindest den Teil von den Gitterpunkten (112) des Teilsatzes prognostiziert, GNSS Ephemerides und/oder Almanacs und/oder Satellitenwiederholungszyklen verwendet werden, die auf den ersten (114) oder den zweiten Satz von zu dem jeweiligen ersten Zeitpunkt empfangenen GNSS-Signalen (116) angelegt werden,
wobei der Prädiktionsprozess ferner eine Interpolation umfasst, wobei die Interpolation für zumindest einen Teil von den Gitterpunkten (112) durchgeführt wird, für welche die Genauigkeit einer Ortsbestimmung für Zeitpunkte, die weiter in der Zukunft liegen als der jeweilige erste Zeitpunkt, nicht verfügbar ist, wobei die Interpolation Gitterpunkte (112) berücksichtigt, für welche die Genauigkeit einer Ortsbestimmung für Zeitpunkte, die weiter in der Zukunft liegen als der jeweilige erste Zeitpunkt, verfügbar ist, wobei die Interpolation geschätzte Genauigkeiten der Ortsbestimmung für die Gitterpunkte (112), für welche die Interpolation durchgeführt wurde, zum Ergebnis hat.

16. Computerprogrammprodukt, computerausführbare Befehle (124) umfassend, um das Roboterfahrzeug nach einem der Ansprüche 1 bis 14 zu veranlassen, die Schritte des Verfahrens nach Anspruch 15 auszuführen.

## Revendications

1. Véhicule robotisé (100) pour une opération mobile dans une zone de travail (108), l'opération mobile comprenant une culture du sol, la zone de travail (108) étant représentée par un ensemble de points de grille de coordonnées discrétisés (112), le véhicule (100) comprenant un récepteur de système mondial de navigation par satellite ou GNSS (106) et un dispositif de commande (118), le dispositif de commande (118) comprenant une mémoire (122) et un processeur, la mémoire (122) comprenant des instructions (124), dans lequel l'exécution des instructions (124) par le processeur amène le véhicule (100) pour chaque point de grille d'un sous-ensemble des points de grille (112) à différents premiers points du temps à réaliser un processus d'initialisation, le processus d'initialisation comprenant :
- la réception à un premier point du temps des différents points du temps d'un premier ensemble de signaux GNSS (114) à partir d'une base de véhicule (104) fixée, ladite base de véhicule (104) étant espacée du véhicule (100) et comprenant un récepteur GNSS pour recevoir le premier ensemble de signaux GNSS,
- la réception audit premier point du temps d'un deuxième ensemble de signaux GNSS (116) depuis le récepteur GNSS (106) du véhicule,
- la détermination d'une exactitude d'une détermination de localisation, la détermination de localisation étant basée sur le deuxième ensemble de signaux GNSS (116), la détermination de l'exactitude étant basée sur une comparaison des qualités de signal du premier ensemble de signaux GNSS (114) et du deuxième ensemble de signaux GNSS (116),
dans lequel l'exécution des instructions (124) par le processeur amène le véhicule (100) à réaliser en outre un processus de prévision pour au moins certains des points de grille (112) du sous-ensemble, le processus de prévision prédisant l'exactitude de la détermination de localisation pour les points à un temps futur par rapport au premier point du temps correspondant, dans lequel le processus de prévision prédisant l'exactitude de la détermination de la localisation pour au moins certains des points de grille (112) du sous-ensemble utilise au moins un parmi les éphémérides, les almanachs et les cycles de répétition satellitaires du GNSS appliqués au premier (114) ou au deuxième ensemble de signaux GNSS (116) reçus au premier point du temps correspondant,
le processus de prévision comprenant en outre une interpolation, l'interpolation étant réalisée pour au moins certains des points de grille (112) pour lesquels l'exactitude d'une détermination de localisation pour des points à un temps futur par rapport au premier point du temps correspondant est indisponible, l'interpolation prenant en compte des points de grille (112) pour lesquels l'exactitude d'une détermination de localisation pour des points à un temps futur par rapport au premier point du temps correspondant est disponible, l'interpolation résultant en des précisions estimées de détermination de localisation pour les points de grille (112) pour lesquels l'interpolation a été réalisée.

2. Véhicule robotisé (100) selon la revendication 1, dans lequel les premiers et deuxièmes signaux GNSS sont reçus depuis des satellites (200) qui sont situés à certaines positions de satellites (208) dans le ciel au-dessus de la base (104) et du véhicule (100), la comparaison des qualités des signaux du premier ensemble de signaux GNSS (114) et du deuxième ensemble de signaux GNSS (116) résultant en un nombre de qualité par position de satellite (208).

3. Véhicule robotisé (100) selon l'une quelconque des revendications précédentes, dans lequel l'au moins un parmi les éphémérides, les almanachs et les cycles de répétition satellitaire du GNSS utilisés pour prévoir à quel point à un temps futur par rapport au premier point du temps correspondant une constellation satellitaire est à nouveau disponible, ladite constellation satellitaire reflétant la constellation satellitaire au premier point du temps correspondant pour les au moins certains points de grille (112) du sous-ensemble.

4. Véhicule robotisé (100) selon l'une quelconque des revendications précédentes, le processus de prévision prédisant l'exactitude de la détermination de localisation comprenant : la prédiction d'une réception des premiers ou deuxièmes signaux GNSS pour lesdits points à un temps futur par rapport au premier point du temps depuis des satellites (200) situés dans une zone de ciel autour des certaines positions satellitaires (208), l'exactitude de la détermination de localisation étant prévue en utilisant la réception prévue des premiers ou deuxièmes signaux GNSS.

5. Véhicule robotisé (100) selon la revendication 4, dans lequel par position satellitaire (208) la prévision de l'exactitude de la détermination de localisation est réalisée en utilisant
- la réception prévue des premiers signaux GNSS pondérés par le nombre de qualité de la position satellitaire (208) concernée ou
- la réception prévue des deuxièmes signaux GNSS excluant les signaux GNSS des positions satellitaires (208) pour lesquelles le nombre de qualité ne répond pas à un premier critère de qualité minimale.

6. Véhicule robotisé (100) selon les revendications 4 ou 5, le ciel au-dessus de la base (104) et du véhicule (100) étant représenté par un ensemble de zones discrétisées (206), la zone de ciel autour d'une certaine position satellitaire (208) étant confinée par les limites qui confinent la zone (206) dans laquelle la position satellitaire (208) est située, dans lequel le processus de prévision comprend en outre la détermination d'une zone de ciel de bonne réception (302) qui comprend au moins certaines des certaines positions satellitaires (208) pour lesquelles le nombre de qualité de la position satellitaire concernée répond à un premier critère de qualité minimale, la zone de ciel autour d'une certaine position satellitaire étant confinée par les limites qui confinent la zone de ciel de bonne réception (302).

7. Véhicule robotisé (100) selon l'une quelconque des revendications précédentes, dans lequel l'exécution des instructions (124) par le processeur amène en outre le véhicule (100) à planifier l'opération mobile pour des points du temps futurs en se basant sur :
au moins certains des points de grille (112) pour lesquels une exactitude de la détermination de localisation est disponible et l'exactitude de la détermination de localisation au niveau de chacun desdits points de grille (112).

8. Véhicule robotisé (100) selon la revendication 7, dans lequel la détermination de l'exactitude de la détermination de localisation prend uniquement en compte les signaux GNSS des positions satellitaires (208) pour lesquelles le nombre de qualité des positions satellitaires (208) concernées répond à un premier critère de qualité minimale, dans lequel éventuellement dans le cas où par rapport à un point de grille donné le nombre de qualité pour une certaine position satellitaire (208) ne répond pas à un premier critère de qualité minimale, pour ce point de grille n'importe quel signal GNSS de ladite position satellitaire (208) est exclu de la planification de l'opération mobile.

9. Véhicule robotisé (100) selon l'une quelconque des revendications 7 à 8, dans lequel la planification de l'opération mobile comprend le regroupement d'au moins certains des points de grille (112) pour lesquels l'exactitude de la détermination de localisation est disponible, le regroupement résultant en un ou plusieurs ensembles de points de grille (112) regroupés, dans lequel pour chaque ensemble des points de grille (112) regroupés en partant d'un second point du temps correspondant le mouvement du véhicule (100) le long dudit ensemble de points de grille (112) regroupés guidé en utilisant un troisième ensemble de signaux GNSS reçus depuis le récepteur GNSS (106) pendant ledit mouvement est possible avec une exactitude de la détermination de localisation pendant le guidage répondant à un second critère de qualité minimale.

10. Véhicule robotisé (100) selon la revendication 9, la zone de travail (108) comprenant des limites confinant la zone de travail (108), dans lequel pour les points de grille (112) situés à l'intérieur d'une zone limite prédéfinie bordant les limites le second critère de qualité minimale est resserré.

11. Véhicule robotisé (100) selon la revendication 9 ou 10, au moins l'un parmi le processus de prévision et le regroupement comprenant pour un point de grille (112) l'ajustement de l'exactitude associée de la détermination de localisation en prenant en compte le fait que la détermination de localisation est en outre réalisée en utilisant une estimation de position par déduction obtenue à partir d'un dispositif de navigation par déduction (602) du véhicule (100), dans lequel éventuellement la prise en compte du fait que la détermination de position est de plus réalisée en utilisant l'estimation de position déduite est restreinte aux points de grille (112) situés à moins d'une distance prédéfinie maximale depuis un point de grille (112) pour lequel l'exactitude associée non ajustée de la détermination de localisation répond au second critère de qualité minimale.

12. Véhicule robotisé (100) selon l'une quelconque des revendications 9 à 11 précédentes, la planification de l'opération mobile comprenant la programmation de l'opération mobile pour obtenir une trajectoire de mouvement (410) du véhicule (100) afin de réaliser l'opération mobile, la programmation comprenant la sélection d'un ou de plusieurs des ensembles de points de grille (112) regroupés, la trajectoire de mouvements (410) comprenant les points de grille (112) du ou des ensembles de points de grille (112) regroupés.

13. Véhicule robotisé (100) selon la revendication 12, dans lequel l'exécution des instructions (124) par le processeur amène en outre le véhicule (100) à réaliser
- un mouvement du véhicule (100) jusqu'auxdits un ou plusieurs des ensembles choisis de points de grille (112) regroupés,
- la répétition des étapes du processus d'initialisation pendant le mouvement pour les points de grille (112) parcourus pendant le mouvement et le premier point du temps étant le point du temps effectif du mouvement sur le point de grille (112) correspondant.

14. Véhicule robotisé (100) selon la revendication 12 ou 13, dans lequel la trajectoire de mouvement (410) obtenue pour une opération mobile contiguë unique entraîne un degré de fragmentation de la zone de travail (108), le degré de fragmentation décrivant le degré de fragmentation de la zone de travail (108) par rapport à des sous-zones de la zone couverte par la trajectoire (410), dans lequel dans le cas où le degré de fragmentation est supérieur à un seuil de fragmentation prédéfini, le second critère de qualité minimale est progressivement relâché dans des limites spécifiées jusqu'à ce que le degré de fragmentation soit inférieur au seuil de fragmentation prédéfini.

15. Procédé d'opération d'un véhicule robotisé (100) pour une opération mobile dans une zone de travail (108), l'opération mobile comprenant une culture du sol, la zone de travail (108) étant représentée par un ensemble de points de grille de coordonnées discrétisés (112), le véhicule (100) comprenant un récepteur de système mondial de navigation par satellite ou GNSS (106), le procédé comprenant la réalisation pour chaque point de grille d'un sous-ensemble des points de grille (112) à différents premiers points du temps d'un processus d'initialisation, le processus d'initialisation comprenant :
- la réception à un premier point du temps des différents points du temps d'un premier ensemble de signaux GNSS (114) à partir d'une base de véhicule (104) fixée, la base de véhicule (104) étant espacée du véhicule (100), ladite base de véhicule (104) étant espacée du véhicule (100) et comprenant un récepteur GNSS pour recevoir le premier ensemble de signaux GNSS,
- la réception audit premier point du temps d'un deuxième ensemble de signaux GNSS (116) depuis le récepteur GNSS (106) du véhicule,
- la détermination d'une exactitude d'une détermination de localisation, la détermination de localisation étant basée sur le deuxième ensemble de signaux GNSS (116), la détermination de l'exactitude étant basée sur une comparaison des qualités de signal du premier ensemble de signaux GNSS (114) et du deuxième ensemble de signaux GNSS (116),
dans lequel l'exécution des instructions (124) par le processeur amène le véhicule (100) à réaliser en outre un processus de prévision pour au moins certains des points de grille (112) du sous-ensemble, le processus de prévision prédisant l'exactitude de la détermination de localisation pour les points à un temps futur par rapport au premier point du temps correspondant, dans lequel le processus de prévision prédisant l'exactitude de la détermination de localisation pour au moins certains des points de grille (112) du sous-ensemble utilise au moins un parmi les éphémérides, les almanachs et les cycles de répétition satellitaires du GNSS appliqués au premier (114) ou au deuxième ensemble de signaux GNSS (116) reçus au premier point du temps correspondant,
le processus de prévision comprenant en outre une interpolation, l'interpolation étant réalisée pour au moins certains des points de grille (112) pour lesquels l'exactitude d'une détermination de localisation pour des points à un temps futur par rapport au premier point du temps correspondant est indisponible, l'interpolation prenant en compte des points de grille (112) pour lesquels l'exactitude d'une détermination de localisation pour des points à un temps futur par rapport au premier point du temps correspondant est disponible, l'interpolation résultant en des précisions estimées de détermination de localisation pour les points de grille (112) pour lesquels l'interpolation a été réalisée.

16. Produit de programme informatique comprenant des instructions exécutables par ordinateur (124) pour amener le véhicule robotisé selon l'une quelconque des revendications 1 à 14 à exécuter les étapes du procédé selon la revendication 15.
